# FASCICULE DE BREVET EUROPEEN

(11) **EP 0 650 996 B1**
(45) Date de publication et mention de la délivrance du brevet: **17.11.1999**
(21) Numéro de dépôt: 94402411.6
(22) Date de dépôt: 26.10.1994
(51) Int. Cl.: C08G 73/02

(54) **Procédé de copolymérisation des composés de l'aniline**
Verfahren zur Copolymerisation von Anilinderivaten
Process of copolymerisation from aniline derivatives

(30) Priorité: 28.10.1993 FR 9312867
(43) Date de publication de la demande: 03.05.1995
(73) Titulaire: ALCATEL, 75008 Paris (FR)
(72) Inventeur: Cotevieille, Denis, F-93100 Montreuil Sous Bois (FR); Galaj, Stanislas, F-94110 Arcueil (FR)
(74) Mandataire: Laroche, Danièle

(56) Documents cités:
- EP-A- 0 545 819
- WO-A-93/01229
- FR-A- 2 622 588
- US-A- 4 940 517

## Description

La présente invention concerne un procédé de copolymérisation des composés de l'aniline.

La demande de brevet européen EP-A-0 545 819 divulgue des copolymères à propriétés magnétiques comprenant des groupes aminoaromatiques parmi lesquels des dérivés de l'aniline. La copolymérisation est réalisée de la manière suivante:
- un premier monomère dérivé de l'aniline et un second monomère, qui est un composé aminoaromatique substitué, sont mis en suspension ou en solution en milieu acide,
- une solution d'un agent oxydant est ajoutée à la suspension ou solution,
- le copolymère obtenu est alors séparé du milieu réactionnel.

Le rendement de la réaction de copolymérisation selon ce procédé est très variable. De plus, le copolymère obtenu contient une forte proportion de monomère n'ayant pas réagit et nécessite une purification.

La présente invention a pour but de procurer un procédé permettant des rendements de copolymérisation des composés dérivés de l'aniline qui soient reproductibles.

L'objet de la présente invention est un procédé de fabrication de copolymères à propriétés magnétiques comprenant une première étape de copolymérisation, par oxydation en milieu acide, d'un premier monomère choisi parmi l'aniline, éventuellement substituée, et les formes iminoquinoniques correspondantes, et d'un second monomère choisi parmi les composés aminoaromatiques substitués comme les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants. Le procédé comprend une première étape de copolymérisation et une deuxième étape de séparation du copolymère, la première étape comportant:
- une phase d'induction pendant laquelle le premier monomère est mis en présence d'au moins un agent d'oxydation et d'au moins un agent d'amorçage, la durée de ladite phase d'induction étant déterminée par l'apparition d'un précipité très fin, on entend par phase d'induction la phase durant laquelle commence l'homopolymérisation du premier monomère,
- et une phase de production pendant laquelle, après l'introduction du second monomère, au moins un agent d'oxydation et au moins un agent d'amorçage sont ajoutés progressivement, on appelle phase de production la phase durant laquelle se produit la copolymérisation des deux monomères.

L'agent d'amorçage et/ou d'oxydation introduit durant la phase d'induction peut être identique ou différent de celui ajouté durant la phase de production. On peut utiliser un seul agent ou un mélange de plusieurs agents.

La durée de la phase d'induction est supérieure à trois secondes et inférieure à une heure. Cette durée est déterminée par l'apparition d'un précipité très fin de polyaniline que l'on observe visuellement; on attend alors pendant une seconde à une minute avant d'introduire le second monomère. La durée de la phase d'induction est liée à la quantité d'oxydant introduite. Lorsque la durée de la phase d'induction est trop brève, l'homopolymérisation de l'aniline n'est pas suffisamment avancée pour permettre la copolymérisation ultérieure. Par contre si cette durée est trop longue, la formation de longues chaines de polyaniline, empêchent la copolymérisation ultérieure selon une séquence permettant l'apparition du ferromagnétisme.

Lors de la phase d'induction, on introduit une quantité inférieure ou égale à 5% de la quantité totale de l'agent d'oxydation et une quantité inférieure ou égale à 25% de la quantité totale de l'agent d'amorçage, les quantités complémentaires de ces agents étant introduites lors de la phase de production.

Avantageusement l'agent d'amorçage est choisi parmi les oligomères obtenus à partir de l'aniline et de ses dérivés, et de préférence l'agent d'amorçage est la N-phényl-p-phénylène diamine.

Selon une première variante de la première étape du procédé, l'agent d'oxydation est un composé du groupe comprenant les persulfates, les bichromates, les chromates, les iodates, les permanganates, et l'eau oxygénée. Suivant le cas, l'agent d'oxydation peut être employé pur ou en solution.

Selon une seconde variante de la première étape, ledit agent d'oxydation est l'oxygène gazeux, par exemple sous forme d'un barbotage.

Selon une troisième variante de la première étape, la copolymérisation est effectuée par oxydation en présence d'une électrode active sous tension. La voie électrochimique permet de maîtriser l'oxydation des monomères pour ajuster la quantité de copolymère formé.

En outre, selon une autre variante de la première étape du procédé, l'oxydation peut être effectuée en présence d'un catalyseur, ce qui permet d'accroître le rendement de la réaction.

Le premier monomère est choisi parmi l'aniline, éventuellement substituée par un substituant choisi parmi le radical -CF₃, le radical -OCH₃, un radical alkyl, par exemple méthyl ou éthyl, et un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels, et les formes iminoquinoniques correspondantes.

Le second monomère est choisi parmi les acides de CLEVE: acide 8-amino-2-naphtalènesulfonique (forme θ) et acide 5-amino-2-naphtalènesulfonique (forme β), l'acide de LAURENT: acide 1-amino-5-naphtalènesulfonique, l'acide de PERI: acide 1-amino-8-naphtalènesulfonique, et les diacides: acide 1-naphtylamino-5,7-disulfonique et acide 1-naphtylamino-6,8-disulfonique.

Selon un autre mode de réalisation, le procédé comporte en outre une seconde étape de purification et de séparation du milieu réactionnel du copolymère obtenu et une troisième étape d'extraction de la phase soluble du copolymère.

Selon une première variante du mode de réalisation, le procédé comporte en outre une troisième étape où une phase soluble est extraite du copolymère par mise en solution au moyen d'une base volatile, puis la solution est rapidement évaporée sous vide et le résidu solide est traité thermiquement.

De préférence, la phase soluble est extraite par mise en solution dans l'ammoniac liquide anhydre.

Selon une seconde variante du mode de réalisation, le procédé comporte en outre une troisième étape où une phase soluble est extraite du copolymère par mise en solution basique, puis la solution est acidifiée afin de précipiter la phase soluble.

De préférence, la mise en solution est effectuée dans une solution d'une base volatile dans un solvant organique, comme par exemple une solution ammoniacale alcoolique.

Selon une autre variante du mode de réalisation, la reprécipitation ou la recristallisation de la phase soluble est effectuée sous champ magnétique ou/et électrique.

Le procédé selon la présente invention a comme avantages de stabiliser les rendements de fabrication du copolymère sans pertes des caractéristiques magnétiques.

D'autres caractéristiques et avantages de la présente invention apparaitront à la lecture des exemples suivants de modes de réalisation, donnés bien entendu à titre illustratif mais nullement limitatif, en référence au dessin annexé sur lequel:
- la figure 1 représente la variation du signal magnétique M en fonction de la variation cyclique du champ H pour un exemple de copolymère ferromagnétique obtenu par le procédé selon l'invention,
- la figure 2 est analogue à la figure 1 pour un exemple de copolymère dont la réponse ferromagnétique n'est pas détectable.

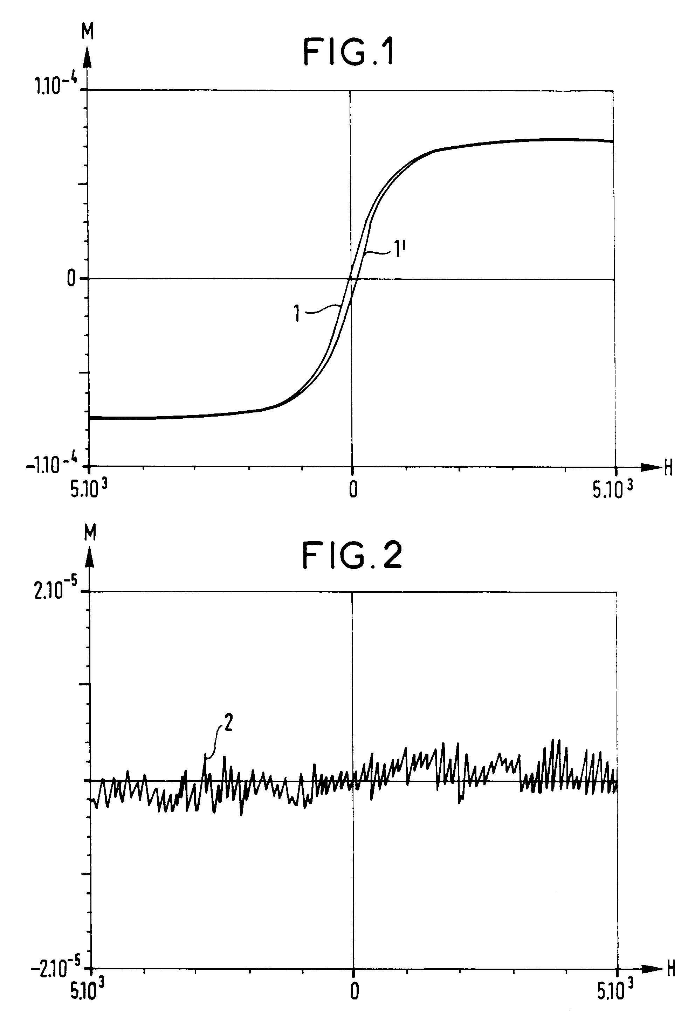

Sur les figures 1 et 2, le champ magnétique appliqué H en Oersteds est donné en abscisse, et en ordonnée le signal magnétique M exprimé en unités relatives (Unités Electro-Magnétiques: emu) pour la masse de l'échantillon de copolymère analysé.

### EXEMPLE 1

On introduit 0,42g d'aniline dans 10ml d'eau acidifiée par lg d'acide paratoluènesulfonique maintenue sous agitation à température ambiante. Dans cette solution sont ajoutés 50mg de persulfate d'ammonium et une goutte de méthanol contenant 0,03mg de N-phényl-p-phénylène diamine en solution. On laisse agir deux minutes. Ceci constitue la phase d'induction.

L'ensemble des opérations qui suivent constituent la phase de production. On ajoute alors lg d'acide 5-amino-2-naphtalènesulfonique (forme β de l'acide de CLEVE) dans le milieu. On attend alors environ trois minutes avant l'introduction de 0,3ml d'une solution à 1g/l de N-phényl-p-phénylène diamine dans le méthanol; la durée d'introduction est de 1mn 20s. Cette addition est renouvelée toutes les 10mn pendant 2 heures. Pendant cette même période de 2 heures, on ajoute dans la solution 2,27g de persulfate d'ammonium en poudre. Le milieu réactionnel est ensuite maintenu sous agitation durant 1 heure.

A partir de la suspension obtenue, on effectue le lavage et la séparation du précipité . Le lavage consiste à redisperser le précipité dans une solution à 25% de diméthylformamide dans l'eau, puis à le récupérer par centrifugation. On termine les lavages avec des solvants contenant très peu d'eau: solution à 25% en volume d'acide acétique dans le méthanol, éther.

La masse verdâtre obtenue est ensuite séchée pendant 24 heures à 75°C sous vide. Le copolymère se présente sous la forme d'une poudre verte très foncée de masse 28,4mg, soit un rendement de 2%.

Sa formule brute est: 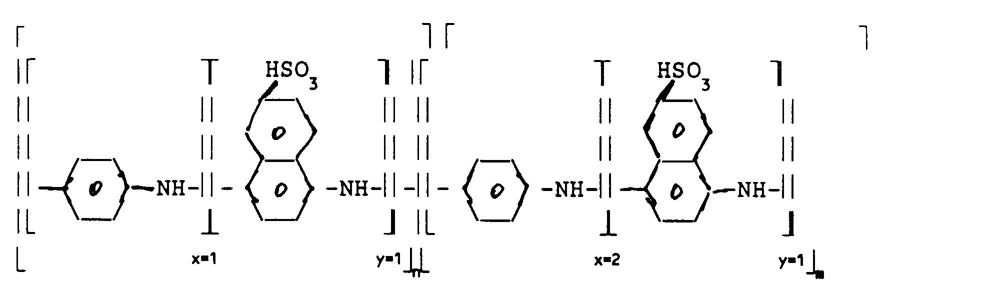 où n est très supérieur à m.

Les mesures de magnétisme sont effectuées à une température de 300K sur un magnétomètre à gradient de champ alternatif. Le résultat se présente sous la forme des courbes 1 et 1' de la figure 1 qui montrent l'évolution de l'aimantation M en fonction du champ magnétique H appliqué à l'échantillon. Cette courbe est caractéristique d'un composé ferromagnétique et présente une hystérésis. L'aimantation à saturation Mₛ est de 0,4emu/g.

### EXEMPLE 2

On introduit 0,42g d'aniline dans 10ml d'eau acidifiée par 1g d'acide paratoluènesulfonique maintenue sous agitation à température ambiante. La phase d'induction consiste à ajouter dans cette solution quelques gouttes d'une solution de 2,32g de persulfate d'ammonium dans 10ml d'eau acidifiée par lg d'acide paratoluènesulfonique, soit environ 12mg de persulfate d'ammonium, et une goutte contenant 0,03mg de N-phényl-p-phénylène diamine en solution concentrée dans le méthanol.

Après dix minutes, on ajoute 1g d'acide 5-amino-2-naphtalènesulfonique (forme β de l'acide de CLEVE) dans le milieu. On entretient la réaction en introduisant simultanément, à un débit de 10ml/h, le reste de la solution de persulfate d'ammonium et 0,3ml d'une solution à 1g/l de N-phényl-p-phénylène diamine dans le méthanol. Le milieu réactionnel est ensuite maintenu sous agitation durant 1 heure.

On obtient une suspension dont on sépare les phases par lavage et centrifugation, suivi d'un séchage à 75°C, dans des conditions analogues à celles décrites dans l'exemple 1. On obtient 24mg de copolymère, soit un rendement de 1,7%.

Sa formule brute est analogue à celle du copolymère préparé dans l'exemple 1, et son aimantation à saturation est de 0,4emu/g.

### EXEMPLE 3

On introduit 0,42g d'aniline dans 10ml d'eau acidifiée par lg d'acide paratoluènesulfonique maintenue sous agitation à température ambiante. La phase d'induction consiste à ajouter dans cette solution quelques gouttes d'une solution de 2,32g de persulfate d'ammonium dans 10ml d'eau acidifiée par lg d'acide paratoluènesulfonique, soit environ 12mg de persulfate d'ammonium, et 5µl d'une solution contenant un oligomère de l'aniline à l'état naissant préparé de la manière suivante: dans 1ml d'eau acidifiée par 100mg d'acide paratoluènesulfonique maintenu sous agitation à température ambiante, on ajoute 0,042g d'aniline et 232mg de persulfate d'ammonium et on laisse agir 6 minutes jusqu'à constatation visuelle de l'apparition de polyaniline dans le milieu.

Après dix minutes, on ajoute 1g d'acide 5-amino-2-naphtalènesulfonique (forme β de l'acide de CLEVE) dans le milieu. On entretient la réaction en introduisant le reste de la solution de persulfate d'ammonium à un débit de 10ml/h. Pendant cette même période d'environ 2 heures, on ajoute 5µl de la solution contenant un oligomère de l'aniline à l'état naissant toute les demi-heures. Le milieu réactionnel est ensuite maintenu sous agitation durant 1 heure.

On obtient une suspension dont on sépare les phases par lavage et centrifugation, suivi d'un séchage à 75°C, dans des conditions analogues à celles décrites dans l'exemple 1. Sa formule brute est analogue à celle du copolymère préparé dans l'exemple 1, et son aimantation à saturation est de 0,4emu/g.

### EXEMPLE 4 Comparaison

On introduit 0,42g d'aniline dans 10ml d'eau acidifiée par 1g d'acide paratoluènesulfonique maintenue sous agitation à température ambiante. Dans cette solution sont ajoutés 50mg de persulfate d'ammonium et une goutte contenant 0,03mg de N-phényl-p-phénylène diamine en solution concentrée dans le méthanol. On laisse agir une minute. Ceci constitue la phase d'induction.

On ajoute alors 1g d'acide 5-amino-2-naphtalènesulfonique (forme β de l'acide de CLEVE) dans le milieu. Puis on introduit 0,3ml d'une solution à 1g/l de N-phényl-p-phénylène diamine dans le méthanol. La durée d'introduction est de 1mn 20s, et cette addition est renouvelée toutes les 10mn pendant deux heures. Simultanément on ajoute dans la solution 2,27g de persulfate d'ammonium en poudre. Le milieu réactionnel est maintenu sous agitation durant 1 heure. On obtient une suspension dont on sépare les phases de la manière décrite dans l'exemple 1.

Après lavage, il ne subsiste pas de produit insoluble. Le rendement en copolymère de la réaction est nul car la durée de la phase d'induction est trop faible pour permettre la formation d'un quantité suffisante de polyaniline.

### EXEMPLE 5 Comparaison

On procède de manière analogue à ce qui est décrit dans l'exemple 4, à l'exception du fait que la phase d'induction a une durée de huit minutes. On obtient 120mg d'un produit de couleur noire qui n'est pas ferromagnétique. Le rendement est de 8,5%.

La durée de la phase d'induction est trop longue ce qui a permis la formation de longues chaines de polyaniline, empêchant la copolymérisation ultérieure selon une séquence permettant l'apparition du ferromagnétisme.

## Revendications

1. Procédé de fabrication de copolymères à propriétés magnétiques comprenant une première étape de copolymérisation, par oxydation en milieu acide, d'un premier monomère choisi parmi l'aniline, éventuellement substituée, et les formes iminoquinoniques correspondantes, et d'un second monomère, différent dudit premier monomère, choisi parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants, ledit procédé comprenant une première étape de copolymérisation et une deuxième étape de séparation du copolymère, caractérisée par le fait que ladite première étape comporte:
- une phase d'induction pendant laquelle ledit premier monomère est mis en présence d'au moins un agent d'oxydation et d'au moins un agent d'amorçage et pendant laquelle on introduit une quantité inférieure ou égale à 5% de la quantité totale dudit agent d'oxydation, la durée de ladite phase d'induction étant déterminée par l'apparition d'un précipité très fin,
- et une phase de production pendant laquelle, après l'introduction dudit second monomère, au moins un agent d'oxydation et au moins un agent d'amorçage sont ajoutés progressivement.

2. Procédé selon la revendication 1, caractérisé par le fait que la durée de ladite phase d'induction est supérieure à une minute et inférieure à une heure.

3. Procédé selon l'une des revendications 1 et 2, caractérisé par le fait que, lors de ladite phase d'induction, on introduit une quantité inférieure ou égale à 5% de la quantité totale dudit agent d'oxydation et une quantité inférieure ou égale à 25% de la quantité totale dudit agent d'amorçage, les quantités complémentaires desdits agents étant introduites lors de ladite phase de production.

4. Procédé selon l'une des revendications précédentes, caractérisé en ce que ledit agent d'amorçage est choisi parmi les oligomères obtenus à partir de l'aniline et de ses dérivés.

5. Procédé selon la revendication 4, caractérisé par le fait que ledit agent d'amorçage est la N-phényl-p-phénylène diamine.

6. Procédé selon l'une des revendications 1 à 5, caractérisé en ce que ledit agent d'oxydation est un composé du groupe comprenant les persulfates, les bichromates, les chromates, les iodates, les permanganates, et l'eau oxygénée.

7. Procédé selon l'une des revendications 1 à 5, caractérisé en ce que ledit agent d'oxydation est l'oxygène gazeux.

8. Procédé selon l'une des revendications 1 à 5, caractérisé en ce que la copolymérisation est effectuée par oxydation en présence d'une électrode active sous tension.

9. Procédé selon l'une des revendications 6 à 8, caractérisé en ce que l'oxydation est effectuée en présence d'un catalyseur.

10. Procédé selon l'une des revendications précédentes, caractérisé par le fait que ledit premier monomère est choisi parmi l'aniline, éventuellement substituée par un substituant choisi parmi le radical -CF3, le radical -OCH3, un radical alkyl, et un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels, et les formes iminoquinoniques correspondantes

11. Procédé selon l'une des revendications précédentes, caractérisé par le fait que ledit second monomère est choisi parmi: l'acide 8-amino-2-naphtalènesulfonique,
l'acide 5-amino-2-naphtalènesulfonique,
l'acide 1-amino-5-naphtalènesulfonique,
l'acide 1-amino-8-naphtalènesulfonique,
l'acide 1-naphtylamino-5,7-disulfonique,
et l'acide 1-naphtylamino-6,8-disulfonique.

12. Procédé de fabrication selon l'une des revendications précédentes, caractérisé en ce que ledit procédé comporte en outre une troisième étape d'extraction de la phase soluble du copolymère.

13. Procédé de fabrication selon la revendication 12, caractérisé en ce que ledit procédé comporte en outre une troisième étape où une phase soluble est extraite dudit copolymère par mise en solution au moyen d'une base volatile, puis ladite solution est rapidement évaporée sous vide et le résidu solide est traité thermiquement.

14. Procédé de fabrication selon la revendication 13, caractérisé en ce que ladite phase soluble est extraite par mise en solution dans l'ammmoniac liquide anhydre.

15. Procédé de fabrication selon la revendication 12, caractérisé en ce que ledit procédé comporte en outre une troisième étape où une phase soluble est extraite dudit copolymère par mise en solution basique, puis ladite solution est acidifiée afin de précipiter ladite phase soluble.

16. Procédé de fabrication selon la revendication 15, caractérisé en ce que ladite mise en solution est effectuée dans une solution d'une base volatile dans un solvant organique.

17. Procédé de fabrication selon l'une des revendications 12 à 16, caractérisé en ce que la reprécipitation ou la recristallisation de ladite phase soluble est effectuée sous champ magnétique ou/et électrique.

## Patentansprüche

1. Verfahren zur Herstellung von Copolymeren mit magnetischen Eigenschaften, das einen ersten Schritt zur Copolymerisation, durch Oxidation in einem sauren Medium, eines ersten Monomers das aus gegebenenfalls substituierten Anilin und entsprechenden Iminochinon-Formen gewählt ist, und eines zweiten, von dem genannten ersten Monomer verschiedenen, Monomers, das aus substituierten Aminoverbindungen, die wenigstens zwei kondensierte Benzolringe aufweisen, substituierten polyzyklischen Verbindungen, die wenigstens eine Anilineinheit in ihrer Struktur aufweisen, Anilinderivaten, die einen Substituenten tragen, der mit dem Ring über eine Ethynyliden- oder Paraphenylenbindung verbunden ist, und entsprechenden Iminochinonverbindungen gewählt ist, aufweist, wobei das genannte Verfahren aus einem ersten Schritt zur Copolymerisation und einen zweiten Schritt zum Abtrennen des Copolymers besteht,
**dadurch gekennzeichnet, daß** der genannte erste Schritt umfaßt:
- eine Induktionsphase, während der das genannte erste Monomer mit wenigstens einem Oxidationsmittel und wenigstens einem Initiator zusammengebracht wird, und während der weniger oder gleich 5 % der Gesamtmenge des genannten Oxidationsmittels zugegeben werden, wobei die Dauer der genannten Induktionsphase durch das Erscheinen eines sehr dünnen Niederschlages bestimmt ist,
- und eine Produktionsphase, während der, nach der Zugabe des genannten zweiten Monomers, wenigstens ein Oxidationsmittel und wenigstens ein Initiator schrittweise hinzugegeben werden.

2. Verfahen nach Anspruch 1,
**dadurch gekennzeichnet, daß** die Dauer der genannten Induktionsphase länger als eine Minute und kürzer als 1 Stunde ist.

3. Verfahren nach einem der Ansprüche 1 und 2,
**dadurch gekennzeichnet, daß** während der genannten Induktionsphase das genannte Oxidationsmittel in einer Menge von unterhalb oder gleich 5 % der Gesamtmenge des genannten Oxidationsmittels und der genannte Initiator in einer Menge von unterhalb oder gleich 25 % der Gesamtmenge des genannten Inititiators zugegeben werden, wobei die restlichen Mengen der genannten Mittel während der genannten Produktionsphase zugegeben werden.

4. Verfahren nach einem der vorhergehenden Ansprüche,
**dadurch gekennzeichnet, daß** der genannte Initiator aus Oligomeren, die ausgehend von Anilin und seinen Derivaten erhalten werden, gewählt ist.

5. Verfahren nach Anspruch 4,
**dadurch gekennzeichnet, daß** der genannte Initiator N-Phenyl-p-phenylendiamin ist.

6. Verfahren nach einem der Ansprüche 1 bis 5,
**dadurch gekennzeichnet, daß** das genannte Oxidationsmittel eine Verbindung aus der Gruppe ist, die Persulfate, Dichromate, Chromate, Jodate, Permanganate und oxygeniertes Wasser umfaßt.

7. Verfahren nach einem der Ansprüche 1 bis 5,
**dadurch gekennzeichnet, daß** das genannte Oxidationsmittel gasförmiger Sauerstoff ist.

8. Verfahren nach einem der Ansprüche 1 bis 5,
**dadurch gekennzeichnet, daß** die Copolymerisation durch Oxidation in Gegenwart einer aktiven, unter Spannung stehenden, Elektrode erfolgt.

9. Verfahren nach einem der Ansprüche 6 bis 8,
**dadurch gekennzeichnet, daß** die Oxidation in Gegenwart eines Katalysators erfolgt.

10. Verfahren nach einem der vorhergehenden Ansprüche,
**dadurch gekennzeichnet, daß** das genannte erste Monomer gewählt ist aus Anilin, das gegebenenfalls durch einen Substituenten substituiert ist, der gewählt ist aus dem Radikal -CF₃, dem Radikal -OCH₃, einem Alkylradikal, wie zum Beispiel Methyl oder Ethyl, und einem Substituenten der Formel -A-Z, bei dem A ein Kohlenwasserstoffradikal mit 2 bis 8 Kohlenstoffatomen ist, in das wenigstens ein Heteroatom, gewählt aus O und S, eingefügt ist, und Z wenigstens ein substituierender Protonendonator oder eines seiner Salze ist, und entsprechenden Iminochinon-Formen.

11. Verfahren nach einem der vorhergehenden Ansprüche,
**dadurch gekennzeichnet, daß** das genannte zweite Monomer gewählt ist aus
8-Amino-2-naphtalensulfonsäure,
5-Amino-2-naphtalensulfonsäure,
1-Amino-5-naphtalensulfonsäure,
1-Amino-8-naphtalensulfonsäure,
1-Naphtylamino-5,7-disulfonsäure,
und 1-Naphtylamino-6,8-disulfonsäure.

12. Herstellverfahren nach einem der vorhergehenden Ansprüche,
**dadurch gekennzeichnet, daß** das genannte Verfahren außerdem einen dritten Schritt zur Extraktion der löslichen Phase des Copolymers umfaßt.

13. Herstellverfahren nach Anspruch 12,
**dadurch gekennzeichnet, daß** das genannte Verfahren außerdem einen dritten Schritt umfaßt, wobei eine lösliche Phase von dem genannten Copolymer durch in Lösung bringen mittels einer flüchtigen Base extrahiert wird, und dann die genannte Lösung unter Vakuum schnell verdampft und der feste Rückstand thermisch behandelt wird.

14. Herstellverfahren nach Anspruch 13,
**dadurch gekennzeichnet, daß** die genannte lösliche Phase durch in Lösung bringen in wasserfreiem, flüssigen Ammoniak extrahiert wird.

15. Herstellverfahren nach Anspruch 12,
**dadurch gekennzeichnet, daß** das genannte Verfahren außerdem einen dritten Schritt umfaßt, wobei eine lösliche Phase von dem genannten Copolymer durch Lösen in einer Base extrahiert wird, und dann die genannte Lösung angesäuert wird, um die genannte lösliche Phase auszufällen.

16. Herstellverfahren nach Anspruch 15,
**dadurch gekennzeichnet, daß** das genannte in Lösung bringen in der Lösung einer flüchtigen Base in einem organischen Lösungsmittel erfolgt.

17. Herstellverfahren nach einem der Ansprüch 12 bis 16,
**dadurch gekennzeichnet, daß** das Wiederausfällen oder die Rekristallisation der genannten löslichen Phase in einem magnetischen und/oder elektrischen Feld erfolgt.

## Claims

1. A method of manufacturing copolymers having magnetic properties, the method comprising a first step of copolymerization, by oxidation in an acid medium, of a first monomer selected from aniline, possibly substituted aniline, and the corresponding iminoquinone forms, and of a second monomer, different from said first monomer, selected from substituted amino compounds comprising at least two condensed benzene nuclei, substituted polycyclic compounds comprising at least one aniline unit in their structure, the compounds derived from aniline carrying a substituent connected to the nucleus by an ethynylidene or a paraphenylene side-chain, and the corresponding iminoquinone compounds, said method comprising a first step of copolymerization and a second step of separating the copolymer, characterized by the fact that said first step comprises:
an induction stage during which said first monomer is put into the presence of at least one oxidizing agent and at least one initiating agent and during which a quantity is added that is not greater than 5% of the total quantity of said oxidizing agent, the duration of said induction phase being determined by the appearance of a very fine precipitate; and
a production stage during which, after said second monomer has been added, at least one oxidizing agent and at least one initiating agent are added progressively.

2. A method according to claim 1, characterized by the fact that the duration of said induction stage is greater than 1 minute and less than 1 hour.

3. A method according to claim 1 or 2, characterized by the fact that during said induction stage, not more than 5% of the total quantity of said oxidizing agent is added and not more than 25% of the total quantity of said initiating agent is added, the remaining quantities of said agents being added during said production stage.

4. A method according to any preceding claim, characterized in that said initiating agent is selected from oligomers obtained from aniline and derivatives thereof.

5. A method according to claim 4, characterized by the fact that said initiating agent is N-phenyl-p-phenylenediamine.

6. A method according to any one of claims 1 to 5, characterized in that said oxidizing agent is a compound from the group comprising persulfates, biochromates, chromates, iodates, permanganates, and oxygenated water.

7. A method according to any one of claims 1 to 5, characterized in that said oxidizing agent is gaseous oxygen.

8. A method according to any one of claims 1 to 5, characterized in that copolymerization is performed by oxidation in the presence of an active electrode under tension.

9. A method according to any one of claims 6 to 8, characterized in that oxidization is performed in the presence of a catalyst.

10. A method according to any preceding claim, characterized by the fact that said monomer is selected from aniline, optionally substituted by a substituent selected from the radical -CF₃, the radical -OCH₃, an alkyl radical, and a substituent having the formula -A-Z in which A is a hydrocarbon radical having 2 to 8 carbon atoms having at least one heteroatom selected from O and S inserted therein, and Z is at least one proton donor substituent or a salt thereof, and the corresponding iminoquinone forms.

11. A method according to any preceding claim, characterized by the fact that said second monomer is selected from:
8-amino-2-naphthalenesulfonic acid;
5-amino-2-naphthalenesulfonic acid;
1-amino-5-naphthalenesulfonic acid;
1-amino-8-naphthalenesulfonic acid;
1-naphthylamino-5,7-disulfonic acid; and
1-naphthylamino-6,8-disulfonic acid.

12. A manufacturing method according to any preceding claim, characterized in that said method further includes a third step of extracting the soluble phase of the copolymer.

13. A manufacturing method according to claim 12, characterized in that said method further includes a third step in which a soluble phase is extracted from said copolymer by making a solution by means of a volatile base, and then rapidly evaporating said solution in a vacuum, with the solid residue being subjected to heat treatment.

14. A manufacturing method according to claim 13, characterized in that said soluble phase is extracted by making a solution in anhydrous liquid ammonia.

15. A manufacturing method according to claim 12, characterized in that said method further includes a third step in which a soluble phase is extracted from said copolymer by making a basic solution, and then making said solution acidic so as to precipitate said soluble phase.

16. A manufacturing method according to claim 15, characterized in that the solution is made in a solution of a volatile base in an organic solvent.

17. A manufacturing method according to any one of claims 12 to 16, characterized in that the reprecipitation or the recrystallization of said soluble phase is performed under a magnetic and/or an electric field.
